# FASCICULE DE BREVET EUROPEEN

(11) **EP 3 896 484 B1**
(45) Date de publication et mention de la délivrance du brevet: **28.12.2022**
(21) Numéro de dépôt: 21166308.3
(22) Date de dépôt: 31.03.2021
(51) Int. Cl.: G01S 13/78, G01S 13/76, G01S 13/91, G01S 7/03, G01S 7/28

(54) **META RADAR SECONDAIRE**
SEKUNDÄRER META-RADAR
SECONDARY META RADAR

(30) Priorité: 16.04.2020 FR 2003806
(43) Date de publication de la demande: 20.10.2021
(73) Titulaire: THALES, 92400 Courbevoie (FR)
(72) Inventeur: BILLAUD, Philippe, 91470 LIMOURS (FR); COLIN, Sylvain, 76520 YMARE (FR); JOLY, Philippe, 91470 LIMOURS (FR)
(74) Mandataire: Atout PI Laplace

(56) Documents cités:
- EP-A1- 3 273 262
- FR-A1- 2 658 967
- FR-A1- 3 019 905
- MARIANO P ET AL: "Multi-functional compact radar for surveillance in terminal areas (RAMS): New solution for radar surveillance in terminal approach area", 2014 TYRRHENIAN INTERNATIONAL WORKSHOP ON DIGITAL COMMUNICATIONS - ENHANCED SURVEILLANCE OF AIRCRAFT AND VEHICLES (TIWDC/ESAV), IEEE, 15 septembre 2014 (2014-09-15), pages 56-61, XP032677366, DOI: 10.1109/TIWDC-ESAV.2014.6945448

## Description

La présente invention se situe dans le domaine du contrôle du trafic aérien (ATC).

Actuellement, le contrôle aérien est principalement basé sur le radar secondaire dont la fiabilité de détection est largement reconnue, le radar secondaire assurant la surveillance synchrone des aéronefs selon les protocoles SSR et mode S. Par ailleurs, la réception asynchrone des squitters longs ADS-B (Automatic Dépendent Surveillance-Broadcast), prévus pour assurer l'anticollision (TCAS : Traffic alert and Collision Avoidance System) à bord des aéronefs, est exploitée au niveau de l'ATC au sol fournissant ainsi une partie du système de surveillance coopérative.

Cette surveillance peut être couplée à une surveillance de type IFF (Identification Friend or Foe), des interrogateurs IFF assurant l'identification des aéronefs selon divers protocoles militaires.

Au sein d'une structure unique regroupant ces senseurs, l'utilisation opérationnelle de ces différentes activités nécessite le fonctionnement simultané :
- de l'écoute synchrone du radar secondaire et de l'interrogateur IFF en cas d'utilisation de ce dernier, ces modes rencontrant une limitation de temps d'éclairement sur la cible pour assurer séparément dans le temps :
   - la surveillance ATC à la fois pour les cibles SSR mais aussi en mode S avec deux à trois registres BDS (commB Data Selector) par avion à extraire par tour, classiquement requis par l'utilisateur ;
   - éventuellement l'identification IFF avec des protocoles dont la protection militaire principale consiste à apporter à la réponse un retard variable important, supplémentaire à la durée liée à la portée et qui requière donc par nature un grand temps d'éclairement de la cible ;
- de l'écoute asynchrone soit des squitters civils en ADS-B soit des squitters militaires en mode 5 :
   - laquelle est particulièrement polluée par les émissions d'interrogations des modes synchrones, nombreuses en particulier en mode S (au moins 2 à 3 interrogations par avion) ;
   - laquelle présente un taux de détection et de décodage faible en présence de nombreuses cibles en raison du manque de sélectivité en azimut car l'écoute asynchrone est par nature omnidirectionnelle.

A titre d'exemple, en considérant 1200 avions par tour d'antenne avec une extraction de deux BDS par cible et un taux de ré-interrogation de l'ordre de 1,5 (liée à différents facteurs externes comme le garbling de réponse, le taux d'occupation du transpondeur, l'évolution de la cible,..), soit 3600 interrogations de ≈ 20 µs (durées issues de l'OACI vol IV Annex 10), on crée une durée de garbling due uniquement aux interrogations synchrones de l'ordre de 140 µs pour des réponses mode S longues, soit 504 millisecondes polluées par tour d'antenne de 4 secondes, correspondant à environ 13% de la durée d'écoute. En effet, de par son fonctionnement synchrone un radar secondaire ne requiert aucune isolation entre sa chaîne d'émission et sa chaîne de réception puisqu'elles fonctionnent à des moments différents, il en résulte que classiquement les fuites de l'émission ont un niveau dans la chaîne de réception proche des réponses les plus fortes normalement attendues d'un avion rendant ainsi toute écoute simultanée impossible pendant la durée de l'interrogation. Ainsi, sur les radars existants, les perturbations des émissions synchrones limitent nécessairement à moins de 87% le taux de détection des squitters ADS-B (ce maximum ne prenant pas en compte toutes les autres possibilités de non détection liées à l'environnement comme le garbling de réponse avec le squitter ADS-B, multitrajet, ...).

De plus, une antenne radar secondaire en ATC est conçue pour un fonctionnement synchrone avec les cibles dans le plan de la normale au panneau principal de l'aérien, il en résulte que sa couverture radio électrique sur 360 degrés, requise pour une écoute asynchrone, présente des limitations que nous détaillerons plus loin.

Pour éviter ces difficultés, l'état de l'art, que l'on trouve par exemple dans les documents FR 3 019 905 A1 et FR 2 658 967 A1, maintient séparées ces différentes activités afin d'assurer une performance la plus élevée en adaptant l'architecture aux spécificités de chaque activité. Ainsi, la réception ADS-B usuelle est souvent constituée de deux antennes de 180° dos à dos associées à deux récepteurs indépendants pour assurer une meilleure détection qu'avec une seule antenne omnidirectionnelle de 360°, lesquelles antennes sont distinctes de l'antenne radar lorsqu'elles sont sur le même site. De plus, l'identification IFF est la plupart du temps réalisée au détriment de la Surveillance Mode S au tour d'antenne et au secteur concerné par l'identification IFF par manque de temps d'éclairement pour effectuer les 2 simultanément à l'azimut demandé pour l'identification IFF.

Par suite, la mise en oeuvre de toutes ces activités de surveillance et d'identification entraîne des coûts de réalisation et de maintenance importants. En particulier, il faut prendre en compte les coûts d'achat, d'infrastructure, de possession et de réseau.

Un but de l'invention est notamment d'obtenir un système de surveillance et d'interrogation intégré à coûts réduits présentant des performances quasi comparables avec des systèmes indépendants. A cet effet, l'invention a pour objet un radar secondaire comportant une antenne présentant un diagramme de rayonnement formant une voie somme dite SUM, un diagramme de rayonnement formant une voie différence dite DIFF et un diagramme formant une voie de contrôle dite CONT, une première chaîne d'émission et de réception étant associée à la voie SUM et une deuxième chaîne d'émission et de réception étant associée à la voie CONT, une chaîne de réception étant associée à la voie DIFF, radar dans lequel :
- chacune desdites chaînes d'émission et de réception est apte à émettre et à recevoir simultanément, la chaîne d'émission comportant un filtrage filtrant les signaux émis à 1090 MHz et la chaîne de réception comportant un filtrage filtrant les signaux émis à 1030 MHz, et ladite chaîne de réception associée à la voie DIFF comportant un filtrage filtrant les signaux émis à 1030 MHz de telle façon que lesdites chaînes fonctionnent indépendamment l'une de l'autre, le niveau de signal en réception restant inchangé lors d'une émission d'interrogation synchrone ;
- les moyens de traitement comportent une adaptation des bandes de fréquence en réception aux caractéristiques de chacun des protocoles de transaction utilisés ;
- lesdites chaînes de réception respectivement des voies SUM, DIFF et CONT sont aptes à fonctionner en écoutes synchrones et asynchrones simultanées de signaux reçus de cibles respectivement sur les diagrammes SUM, DIFF et CONT, lesdites écoutes synchrones et asynchrones étant indépendantes l'une de l'autre, le niveau de signal en réception restant inchangé lors d'une émission d'interrogation synchrone.

Dans un mode de réalisation particulier, ledit diagramme CONT étant composé d'un diagramme de rayonnement avant formant une voie dite CONT_Front et d'un diagramme de rayonnement arrière formant une voie dite CONT_Back, un traitement séparé desdits diagrammes CONT_Front et CONT_Back est réalisé de telle façon que chacune desdites chaînes d'émission et de réception est appliquée sur la voie CONT_Front et sur la voie CONT_Back.

Ledit radar comporte par exemple un kit d'extension du diagramme de rayonnement de la voie CONT_Back disposé sur la face arrière de ladite antenne, ledit kit comportant trois patchs rayonnants :
- un premier patch pour combler le trou de détection en élévation dit cône de silence ;
- un second patch pour combler le trou de détection à l'azimut 90° ;
- un troisième patch pour combler le trou de détection à l'azimut -90°.

Chacune desdites chaînes d'émission comporte par exemple des filtrages dédiés à la réjection des signaux parasites émis à 1090 MHz.

Chacune desdites chaînes de réception comporte par exemple des filtrages dédiés à la rejection des signaux parasites à 1030 MHz, provenant de la voie d'émission.

Dans un cas où il a pour mission la surveillance ATC, ledit radar effectue par exemple des écoutes simultanées sur lesdits diagrammes séparément des squitters ADS-B et indépendamment de transactions synchrones.

Dans un cas où il a pour mission l'identification IFF, ledit radar effectue par exemple des détections synchrones IFF, indépendamment de transactions synchrones en SSR et mode S.

Dans un cas où il a pour mission l'identification IFF, ledit radar effectue par exemple des écoutes simultanées sur lesdits diagrammes séparément des squitters Mode 5 de niveau 2, indépendamment de transactions synchrones.

Dans un cas où il a pour mission le contrôle de l'environnement aérien (25), ledit radar effectue par exemple des écoutes simultanées sur lesdits diagrammes séparément de tout type de réponses secondaires, indépendamment de transactions synchrones.

Ledit radar émettant successivement selon des périodes d'interrogations non sélectives, dites « All Call », et des périodes d'interrogations sélectives dites « Roll Call », les interrogations sélectives commencent par exemple dans les périodes d'interrogations non sélectives.

Ledit radar émettant successivement selon des périodes d'interrogations non sélectives, dite « All Call », et des périodes d'interrogations sélectives dites « Roll Call », les écoutes non sélectives débutées lors des périodes « All Call » continuent par exemple dans les périodes « Roll Call ».

D'autres caractéristiques et avantages de l'invention apparaîtront à l'aide de la description qui suit, faite en regard de dessins annexés qui représentent :
La figure 1a, un synoptique d'un exemple de réalisation d'un radar secondaire usuel ;
La figure 1b, un synoptique d'un exemple de réalisation d'un radar selon l'invention ;
La figure 2a, des étapes possibles pour la mise en oeuvre de l'invention ;
La figure 2b, un exemple de séquencements de transactions exécutées par un radar selon l'art antérieur ;
La figure 2c, un exemple de séquencements de transactions exécutées par un radar selon l'invention ;
La figure 3, une illustration d'une des étapes précitées ;
La figure 4a, une présentation des gains de 3 diagrammes SUM, CONT_Front et CONT_Back de l'antenne en fonction de l'azimut +/-180° ;
[Fig.4b] La figure 4b, une présentation de l'apport de l'extension de diagramme CONT_Back en azimut selon l'invention ;
La figure 4c, une présentation des gains de 3 diagrammes SUM, CONT_Front et CONT_Back de l'antenne en fonction de l'élévation de -60° à +180° ;
La figure 4d, une présentation de l'apport de l'extension de diagramme CONT_Back en élévation selon l'invention ;
La figure 5, une gestion des transactions non sélectives et sélectives selon l'art antérieur ;
La figure 6, un exemple de gestion des transactions non sélectives et sélectives dans un radar selon l'invention ;
La figure 7, un autre exemple de gestion des transactions dans un radar selon l'invention ;
La figure 8a présente le synoptique d'un kit d'extension du diagramme CONT_Back d'une antenne ATC secondaire ;
La figure 8b présente le principe de l'implémentation kit d'extension du diagramme CONT_Back sur une antenne ATC secondaire.

Pour réduire les divers coûts mentionnés en introduction, la présente invention propose un même système, que l'on appellera Méta Senseur Secondaire Full Duplex, regroupant toutes les activités de senseurs au sol :
- Radar Secondaire usuel : assurant la surveillance synchrone des aéronefs selon les protocoles SSR et Mode S ;
- Interrogateur IFF assurant l'identification des aéronefs selon les protocoles Mode 4 et Mode 5 ;
- Récepteur asynchrone de squitter ADS-B long (DF17/18) ;
- Récepteur asynchrone de squitter Mode 5 niveau 2 ;
en exploitant en outre la même structure d'aérien (tour, antenne, motorisation, joint tournant, câbles, ..) et la même infrastructure.

L'approche de la solution apportée par l'invention est donc, dans un contexte de ressources communes à ces différentes activités au sein du méta senseur secondaire, d'exploiter les spécificités de ces activités pour les orthogonaliser. On entend par rendre orthogonales, rendre indépendantes les unes des autres et ainsi obtenir de chacune les mêmes performances qu'elles soient seules à fonctionner ou toutes activées simultanément.

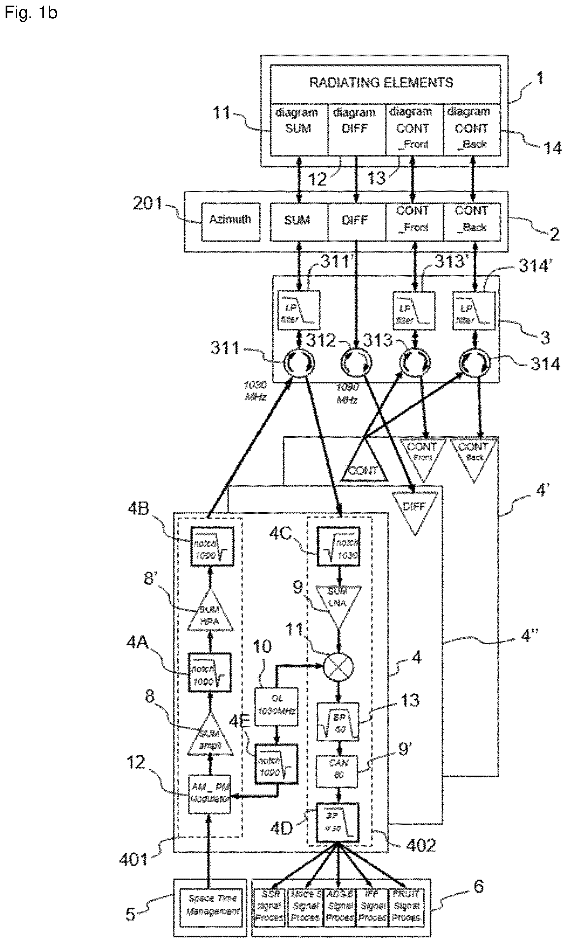

Le méta senseur assure ainsi :
- l'émission et la réception simultanées des différents signaux, assurant une totale indépendance entre les tâches d'émission et les tâches de réception en exploitant l'aspect bi-fréquences caractéristique d'un radar secondaire (émission à 1030 MHz et réception à 1090 MHz), un tel fonctionnement d'émission et de réception simultanées sera appelé par la suite « full duplex » ;
- un filtrage adapté aux caractéristiques de chaque protocole employé, c'est-à-dire permettant de ne traiter que la bande de fréquence contenant du signal utile comme l'illustre la figure 1b décrite par la suite ;
- une écoute synchrone simultanée en Surveillance ATC (en SSR et en mode S) avec l'Identification IFF (dans les modes chiffrés militaires)
- une écoute asynchrone sur les différents diagrammes d'antennes physiquement disponibles, fonction de l'architecture de l'aérien, mais aussi l'amélioration des caractéristiques de rayonnement du radar pour l'écoute asynchrone uniquement afin d'assurer une meilleure couverture en haute élévation ainsi qu'une écoute temporelle de presque 100% en azimut.

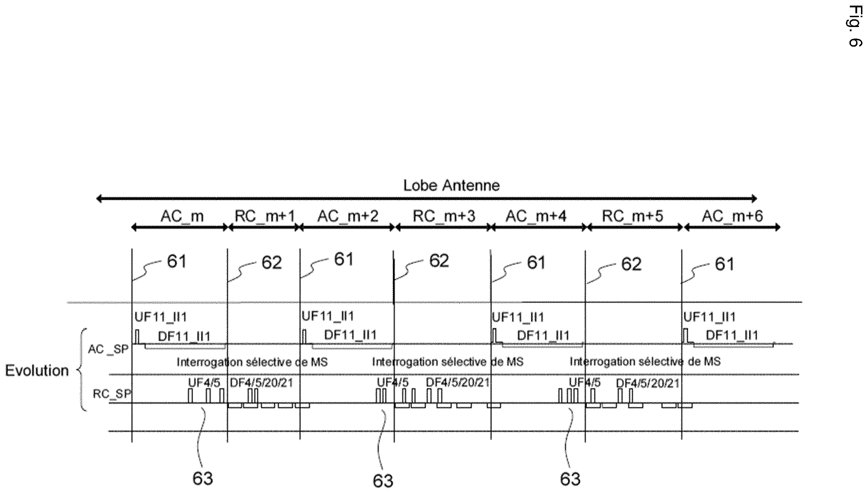

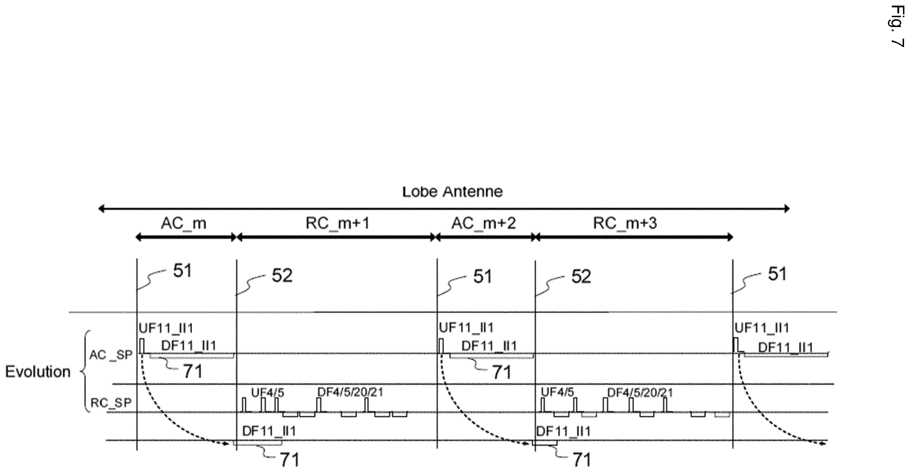

Le fonctionnement en « full duplex » selon l'invention permet donc :
- d'assurer les écoutes asynchrones (squitters ADS-B ou mode 5 niveau 2) sans subir les perturbations dues aux émissions synchrones ;
- au sein même du protocole mode S, d'optimiser la durée des séquences de transactions sélectives (dans les périodes dites Roll Call - RC) et ainsi de réduire la limite de temps d'éclairement sur les cibles, pas seulement mais particulièrement sensible dans le cas de radar à vitesse de rotation élevée, typiquement de 4 secondes par tour d'antenne usuelle en configuration aéroport par exemple (voir la figure 6) ;
- indépendamment de l'optimisation des RC, la détection des cibles dès leur entrée dans la portée radioélectrique du radar sans perturber le fonctionnement opérationnel du radar, c'est-à-dire sans modifier la durée des périodes All Call dédiées à cet effet (voir la figure 7), ceci permet alors de verrouiller plus tôt ces cibles entrantes pour supprimer les réponses DF11 qu'elles génèrent suite aux interrogations UF11 de ce radar
   - ce qui consomme inutilement leur potentiel de réponse ;
   - ce qui crée de la pollution que constitue ces réponses pour les autres radars, en particulier ceux plus proches de la cible ;

Le filtrage adapté à chaque protocole employé permet d'avoir une bande d'analyse au niveau du récepteur au besoin le plus large que l'on complète par ces filtrages adaptés à la bande utile de signal de chaque protocole (c'est-à-dire à la fois le spectre de sa modulation mais aussi sa stabilité en fréquence de la porteuse du transpondeur) ce qui permet de réduire le niveau de bruit, et autorise ainsi à diminuer le seuil de détection pour traiter des signaux plus faibles et donc d'améliorer en outre la portée ;

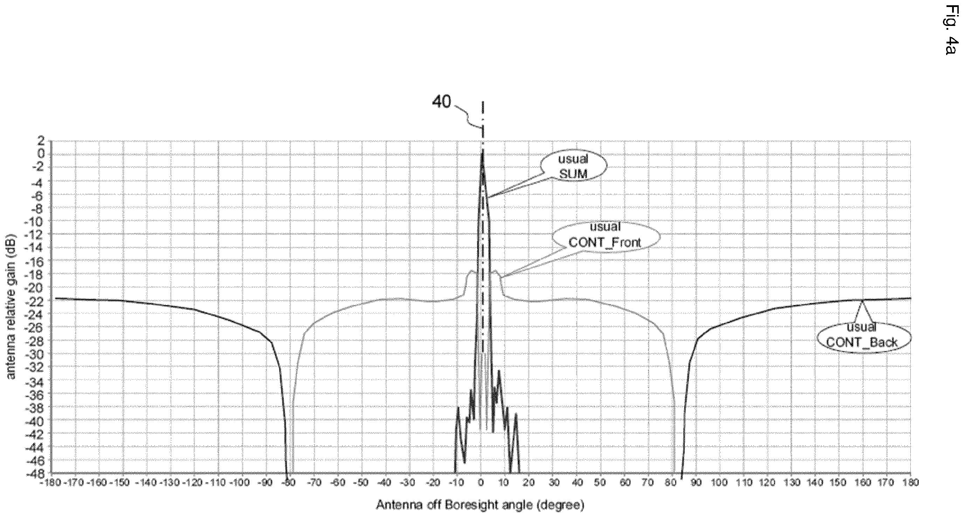

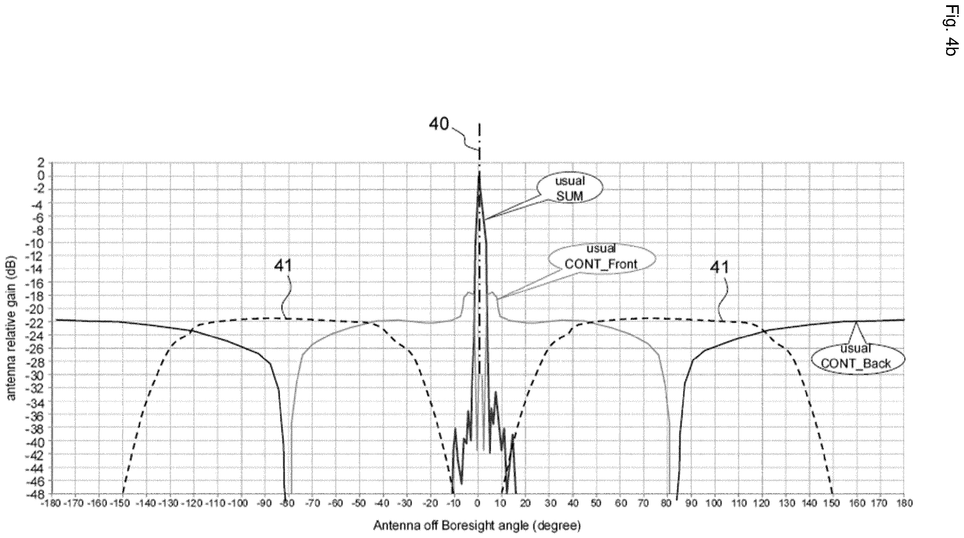

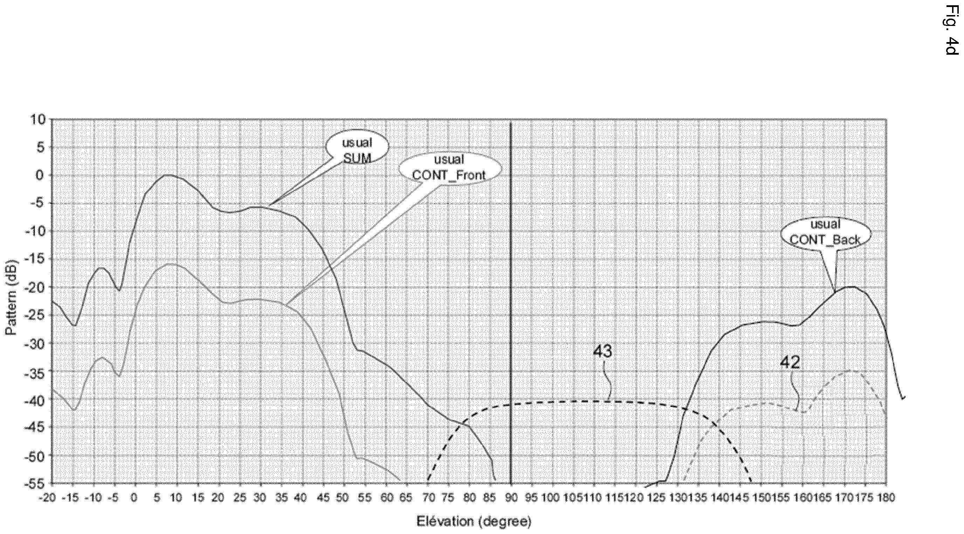

L'écoute asynchrone indépendante, donc simultanée sur les trois ou quatre diagrammes d'une antenne ATC usuelle permet :
- en traitant en réception indépendamment les diagrammes SUM, DIFF, CONT_Front et CONT_Back),
   - d'assurer une couverture temporelle de l'écoute asynchrone de l'ordre de 75% à moyenne distance (voir figure 4a),
   - de mieux détecter des squitters simultanés en exploitant leur différence de gisement si elle existe, pour réduire le taux de chevauchement des réponses assez longues (120 µs) induisant des non détections de ces squitters,
- de plus, en complétant le diagramme de rayonnement de l'antenne ATC secondaire du Radar, dans son fonctionnement en détection asynchrone afin d'assurer :
   - la couverture dans le cône de silence (Cos) (voir figure 4d) ;
   - une couverture temporelle de 100% sur la distance maximale en ADS-B et comme en IFF (voir figure 4b).

On décrit ci-après, à l'aide des figures, les caractéristiques et avantages de l'invention exposée précédemment.

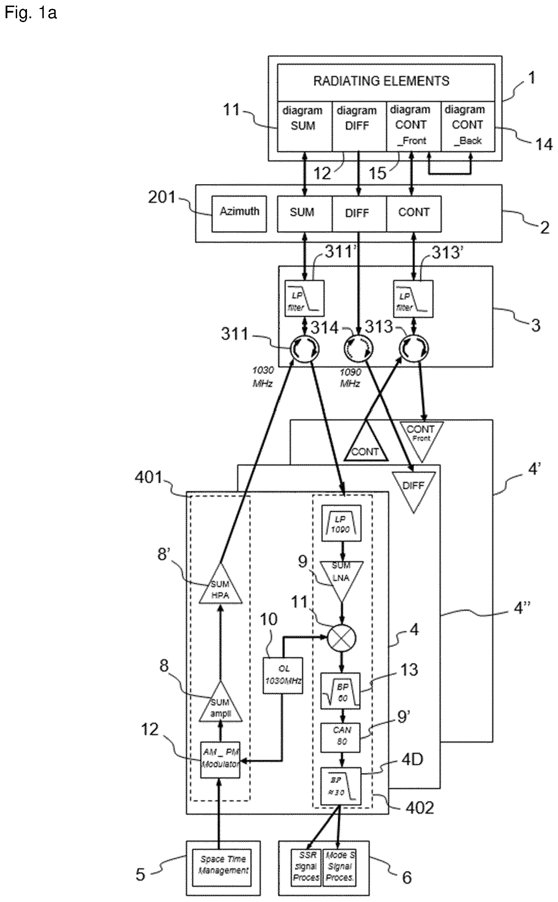

La figure 1a présente pour mémoire un synoptique d'un radar de Surveillance ATC usuel pour lequel seul le fonctionnement Synchrone en mode S et SSR est attendu. Les chaînes d'émission 401 et de réception 402 possèdent un niveau d'isolation juste suffisant pour garantir la non destruction en cas de TOS infini au niveau de la sortie baie de traitement. Les diagrammes CONT_Front et CONT_Back de l'antenne secondaire ATC sont fusionnés au niveau de l'aérien 1,2 (diagramme CONT) puisque tous les signaux non dans l'axe exact de l'antenne, celui de SUM, sont simplement rejetés qu'ils soient issus de devant ou de derrière.

La figure 1b présente un synoptique d'un dispositif selon l'invention. Par l'architecture proposée, on obtient les propriétés du Méta Senseur Secondaire « Full Duplex » exposées précédemment. En particulier, cette architecture assure le fonctionnement simultané des différents protocoles secondaires sans quasi aucune influence de l'un sur l'autre. On garantit ainsi pour chaque protocole, en fonctionnement simultané avec les autres protocoles, ses mêmes performances atteignables dans la structure antennaire du senseur avec les autres protocoles inactifs. L'architecture de la figure 1b est l'évolution de l'architecture d'un radar secondaire usuelle présentée en figure 1a. Une partie de la description qui suit décrit les composants déjà présents dans le radar usuel de la figure 1a, les éléments supplémentaires étant mis en évidence par des traits plus gras.

Dans son emploi usuel, le radar secondaire fonctionne en mode synchrone, c'est-à-dire qu'il émet une interrogation et attend une réponse en cohérence avec celle-ci, ce qui lui permet de localiser par mesure (en azimut et distance) et d'identifier (typiquement par l'adresse en protocole Mode S) la cible.

Pour effectuer cette tâche avec performance, le radar est équipé d'une antenne 1 ayant plusieurs diagrammes 11, 12, 13, 14, dont les rôles sont classiquement :
- un diagramme somme 11, noté par la suite SUM, pour interroger et détecter la réponse synchrone de la cible ;
- un diagramme différence 12, noté DIFF, pour localiser finement la cible dans le faisceau SUM ;
- un diagramme de contrôle, noté CONT (voir figure 1a), qui peut être avantageusement séparé en deux diagrammes dans le cadre d'une option de l'invention (celle-ci pouvant donc être envisagée en considérant le traitement séparé des 3 ou des 4 diagrammes de l'antenne) :
   ∘ un premier diagramme de contrôle 13, noté CONT_Front, pour bloquer et rejeter les réponses issues de cibles face à l'antenne non présentes dans le faisceau principal de SUM ;
   ∘ un deuxième diagramme de contrôle 14, noté CONT_Back, pour bloquer et rejeter les réponses issues de cibles au dos à l'antenne (donc forcément non présentes dans le faisceau principal de SUM).
   Dans la suite de l'invention on considère cette configuration utilisant les diagrammes CONT_Front et CONT_Back, un traitement séparé de ces deux diagrammes pouvant être réalisé. La référence à la voie CONT pourra inclure les voies CONT_Front et CONT_Back en regard de l'exemple de la figure 1b.

Un joint tournant 2 et des câbles de descente d'antenne, pour une antenne tournante, assurent :
- le couplage RF des signaux transmis à 1030 MHz et reçus à 1090 MHz indépendamment pour les quatre diagrammes (SUM, DIFF, CONT_Front et CONT_Back) entre la partie tournante et la partie fixe du radar ;
- la diffusion de la position en azimut 201 de l'axe du lobe principal de l'antenne.

Un duplexeur 3 réalise le couplage RF entre les signaux transmis à 1030 MHz et reçus à 1090 MHz indépendamment pour les quatre diagrammes. A cet effet, le duplexeur 3 comporte un circulateur associé à chaque voie. Dans l'exemple de la figure 1b, trois circulateurs 311, 313, 314 découplent l'émission à 1030 MHz et la réception à 1090 MHz respectivement des voies SUM, CONT_Front et CONT_Back. En fonctionnement purement synchrone, l'écoute s'effectue uniquement dans le lobe principal du radar, c'est-à-dire sur les voies SUM et DIFF après la phase d'émission sur les voies SUM et CONT. Comme la voie DIFF fonctionne uniquement en réception, le circulateur 312 ne fonctionne que dans un sens, aiguillant uniquement les signaux de réception issus de l'antenne (le circulateur est optionnel, son emploi sur DIFF n'a pour but que d'équilibrer les signaux entre SUM et DIFF pour la mesure d'écartométrie). En mode synchrone, l'écoute sur la voie CONT n'a pour but que de rejeter les réponses reçues avec plus d'énergie dans le diagramme CONT que dans le diagramme SUM.

Des filtres 311', 313', 314' sont disposés en amont des circulateurs sur les voies SUM, CONT_Front et CONT_Back. Ces filtres sont principalement utilisés en aval en émission en filtrant les harmoniques des signaux émis. Ces mêmes filtres servent aussi en réception pour protéger de fréquences en dehors de la bande utile du radar secondaire (c'est-à-dire de l'ordre de 1020 à 1100 MHz).

Les voies SUM et CONT réalisent donc l'émission et la réception. Pour des raisons de lisibilité, on ne représente sur la figure 1b (et sur la figure 1a) que les circuits d'émission et de réception 4 de la voie SUM (les circuits étant les mêmes pour la voie CONT, ou les voies CONT_Front et CONT_Back) :
- l'architecture des circuits d'émission et de réception 4' de la voie CONT (figure 1a) et CONT_Front / CONT_Back (figure 1b) étant analogues respectivement à ceux de SUM.
- les circuits 4" de la voie DIFF ne sont pas illustrés et sont identiques à ceux de la réception de SUM.

Une gestion spatio-temporelle 5 assurant la gestion temps réel des périodes d'interrogations et d'écoutes associées pour les différents protocoles secondaires : IFF, SSR et Mode S. Un traitement de signal 6 spécifique par protocole exploitant séparément les signaux issus des différents diagrammes SUM, DIFF, CONT_Front et CONT_Back.

Toujours en regard de la figure 1b, on décrit maintenant la partie d'émission et de réception 4 associée à la voie SUM située entre le circulateur 311 du duplexeur et la gestion spatio-temporelle 5 et le traitement de signal 6. Cette partie d'émission/réception 4 comporte des adaptations spécifiques à l'invention. En particulier, la chaîne d'émission SUM 401, émettant à 1030 MHz, incorpore des filtrages supplémentaires 4A, 4B dédiés à la réduction du bruit d'émission, plus particulièrement à la réjection des signaux parasites à 1090 MHz afin que le niveau du bruit résiduel, après couplage 311, soit au niveau du bruit du récepteur. La chaîne d'émission comporte un premier amplificateur 8 effectuant une première amplification, il est suivi d'un premier filtre 4A. Celui-ci est suivi d'un deuxième amplificateur 8', amplificateur de puissance, délivrant le signal d'émission, celui-ci étant suivi du deuxième filtre 4B.

La chaîne de réception SUM 402, fonctionnant à 1090 MHz, comporte classiquement un amplificateur faible bruit 9 et un convertisseur analogiquenumérique (CAN) 9'. Elle comporte également des adaptations propres à l'invention, comme pour la chaîne d'émission, notamment des filtrages supplémentaires 4C, 4D dédiés à la réjection des signaux parasites à 1030 MHz, provenant de la voie d'émission, pour que le niveau de couplage au niveau du circulateur (ou dû au TOS de l'aérien) et le repliement en bande de base soit au niveau du bruit du récepteur. En particulier, la voie de réception comporte un filtre 4C en entrée, en amont de l'amplificateur faible bruit 9. Ce filtre, de type passe bande, est destiné à :
- sélecter les signaux de réception dans la bande de fréquences autour de 1090 MHz ;
- rejeter très fortement la bande de fréquences autour de 1030 MHz, provenant de la chaîne d'émission.
Le montage de la figure 1b est un exemple de réalisation particulier comportant un oscillateur local (OL) 10, oscillant à 1030 MHz, partagé entre la voie d'émission 401 et la voie de réception 402.

Dans la voie d'émission, en amont du premier amplificateur 8, le signal d'émission est modulé par un modulateur 12 à la fréquence de l'oscillateur local 10, à 1030 MHz. Un filtre 4E est intercalé entre l'oscillateur et le modulateur, destiné à filtrer le bruit à 1090 MHz. Dans la voie de réception, avant conversion analogiquenumérique 9' le signal reçu est mélangé avec le signal de l'oscillateur local par un mélangeur 11, puis filtré par un filtre passe-bande 13. Un filtre 4D est disposé en sortie du CAN 9' pour filtrer le signal à 1030 MHz.

La voie DIFF fonctionnant uniquement en réception comporte une chaîne de réception analogue à la chaîne de réception 402 de la voie SUM, en particulier elle comporte le filtrage 4C, 4D filtrant les signaux émis à 1030 MHz. L'ensemble des chaînes, d'émission et/ou de réception SUM, DIFF et CONT fonctionnent indépendamment l'une de l'autre.

Les quatre diagrammes de l'antenne ATC civil sont traités séparément, nécessitant un récepteur 4 voies (ou 3 voies si on additionne CONT_Front et CONT_Back en une voie CONT comme usuellement et illustré par la figure 1a).

Chaque traitement du signal 6, avant tout décodage des réponses, adapte indépendamment sa bande d'analyse aux caractéristiques du protocole dont il détecte les réponses. Ce filtrage adapté à chaque protocole utilisé permet d'obtenir de meilleures performances en réduisant le niveau de bruit, permettant donc de diminuer le seuil de détection indépendamment pour chaque protocole afin de traiter les signaux plus faibles.

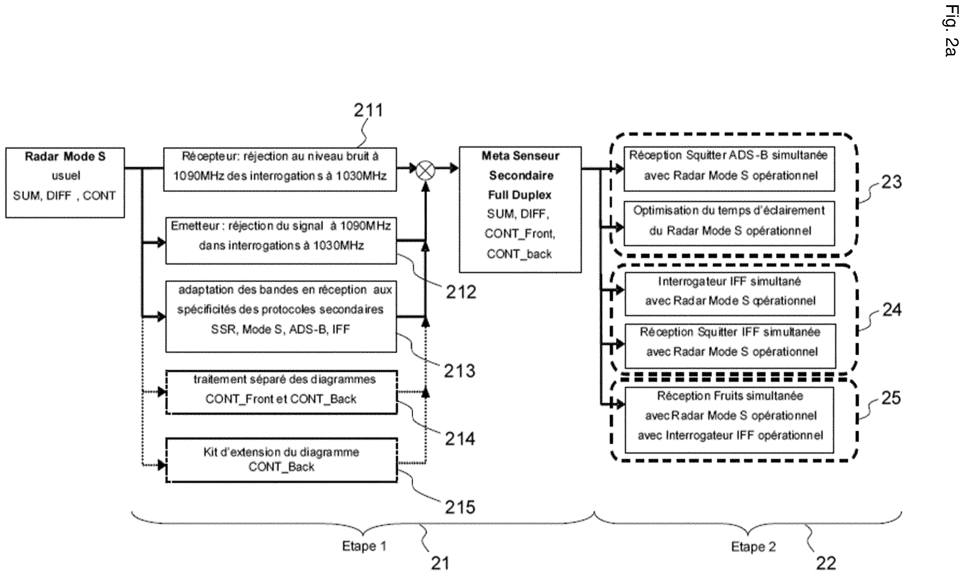

La figure 2a illustre les étapes pour la mise en oeuvre de l'invention. Deux étapes au moins sont nécessaires à cette mise en oeuvre.

La première étape 21 permet le passage d'un radar secondaire mode S usuel à un Meta Senseur Secondaire « Full Duplex » selon l'invention. Dans cette étape 21, on réalise l'orthogonalisation des différents protocoles et l'adaptation du radar à la réception asynchrone. L'orthogonalisation consiste ici à rendre les traitements des protocoles totalement indépendants. En pratique, l'orthogonalisation des protocoles est effectuée :
- Au niveau 211 de la chaîne de réception à 1090 MHz, par la réjection des interrogations à 1030 MHz au niveau du bruit de cette chaîne à 1090 MHz, comme illustré par les filtres 4C, 4D de la figure 1b ;
- Au niveau 212 de la chaîne d'émission à 1030 MHz, par la réjection du signal émis à 1090 MHz en dessous du bruit de la réception à 1090 MHz, comme illustré par les filtres 4A, 4B de la figure 1b ;
- En réception, par l'adaptation 213 des bandes d'analyse (BeamWidth_BW) aux caractéristiques des protocoles employés, de telle façon notamment que :
   - BW_IFF > BW_SSR > BW_MS > BW_ADS-B, où BW_IFF, BW_SSR, BW_MS et BW_ADS-B représentent respectivement les largeurs de bandes IFF, SSR, mode S et ADS-B.
- Par l'écoute asynchrone simultanée :
   - sur le plus de diagrammes indépendants existants dans un radar secondaire,
   - en option 214, un traitement séparé des diagrammes CONT_Front et CONT_Back pouvant être réalisé,
   - en autre option 215, un kit d'extension du diagramme de CONT_Back en réception uniquement pour assurer la couverture RF en haute élévation et complète sur 360° en azimut.

Dans la deuxième étape 22, on effectue l'exploitation opérationnelle de l'orthogonalisation des protocoles :
- Dans le domaine du contrôle aérien civil 23, ou surveillance ATC :
   - Par l'écoute asynchrone simultanée sur les trois ou quatre diagrammes séparément des squitters ADS-B, indépendamment des activités synchrones ;
   - Par l'optimisation de la durée des séquences de transactions sélectives en n'ayant plus d'autre contrainte majeure que le non chevauchement des périodes d'écoute pour éviter du « garbling de réponse » et le non chevauchement des interrogations par nature du fait de l'unicité de l'émetteur, ceci avec des périodes d'écoutes sélectives simultanées à des périodes d'émissions sélectives ;
- Dans le domaine du contrôle aérien militaire 24, ou identification IFF :
   - Par l'interrogateur IFF qui assure ses transactions d'identification avec comme seule restriction l'accès à la ressource d'émission commune avec la surveillance SSR/Mode S ;
   - Par l'écoute simultanée sur les trois ou quatre diagrammes séparément des squitters Mode 5 niveau 2, indépendamment des activités synchrones ;
- Dans le domaine du contrôle de l'environnement aérien 25 :
   - Par l'écoute simultanée sur les trois ou quatre diagrammes séparément de tout type de réponses secondaires (dont les FRUIT False Reply Unsynchonized In Time), indépendamment des activités synchrones.

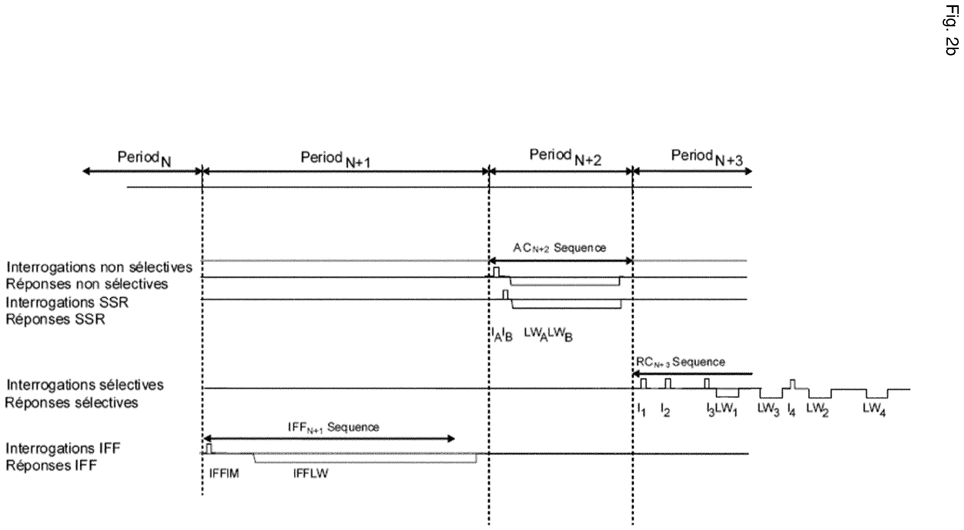

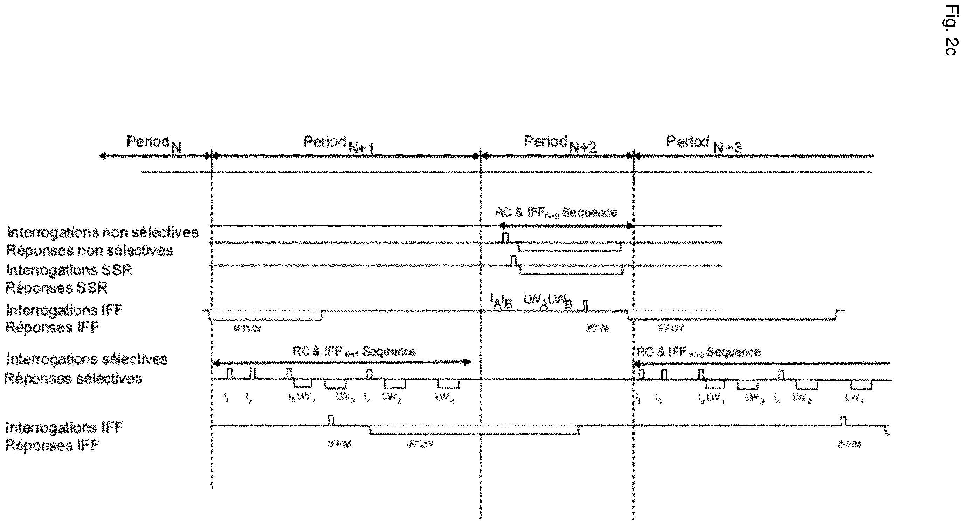

Les figures 2b et 2c illustrent respectivement le séquencement des interrogations IFF et SSR/Mode S pour un radar selon l'art antérieur et pour un radar selon l'invention. La figure 2b illustre donc le fonctionnement usuel, selon l'art antérieur, par un exemple de séquencement de trois périodes successives :
- Période N+2 : AC (All Call) dédiée aux transactions non sélectives SSR et mode S ;
- Périodes N+3 : RC (Roll Call) dédiée aux transactions sélectives mode S ;
- Période N+1 : IFF dédiée au mode militaire.
Si le temps d'éclairement sur une cible le permet, le radar peut au mieux entrelacer les périodes selon le séquencement ci-dessus et illustré par la figure 2b. Si le temps d'éclairement ne le permet pas, c'est-à-dire à vitesse de rotation d'antenne élevée (cas le plus usuel), le radar effectue alors les identifications militaires IFF au détriment de la surveillance civile, les trois périodes ne pouvant tenir dans le temps d'éclairement.

La figure 2c illustre un exemple de fonctionnement selon l'invention. Dans ce cas les transactions peuvent se chevaucher d'une période à l'autre, et en particulier les identifications IFF peuvent être prolongées sur les périodes N+2 et N+3. En effet, le radar selon l'invention exécute les transactions IFF sur leur propre rythme (qui diffère complètement de celui des transactions SSR et mode S) indépendamment des périodes AC et RC toujours dédiées aux modes SSR et au mode S. Cette orthogonalisation fonctionnelle (voir figure 2a) exploite l'isolation RF de l'émission et de la réception (voir figure 1b) qui permet à la fois :
- la détection IFF malgré les émissions nombreuses en mode S (voir les périodes N+1 et N+3 sur la figure 2c) ;
- mais aussi la détection mode S malgré les quelques émissions IFF (voir les périodes N+1 et N+2 sur la figure 2c).
Cela permet les identifications militaires IFF et la surveillance civile simultanées, même pour des radars à vitesse de rotation élevée.

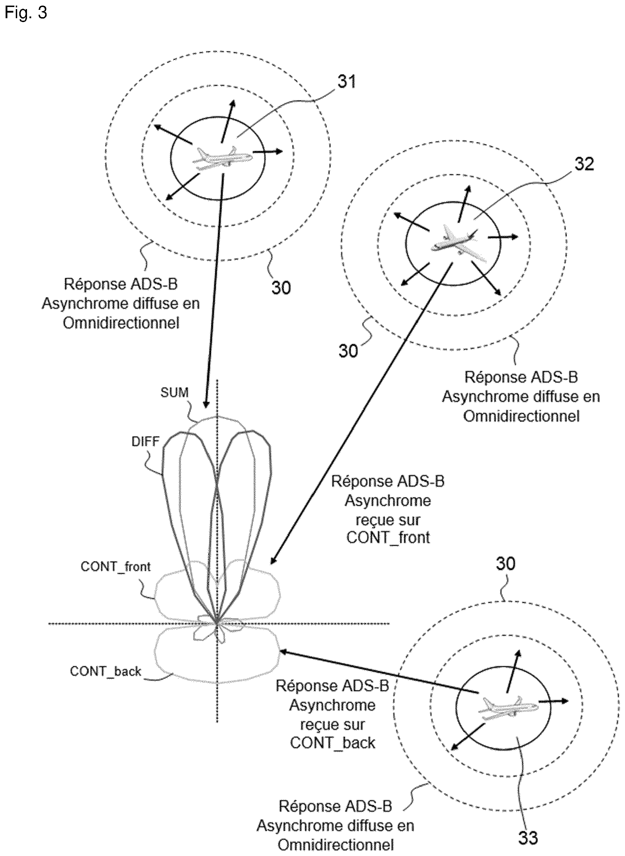

La figure 3 illustre un exemple d'exploitation opérationnelle, conformément à l'étape 23 décrite précédemment, optimisant une surveillance ATC. Cet exemple d'exploitation est illustré en regard de trois aéronefs 31, 32, 33 présents dans l'environnement d'un radar selon l'invention. L'écoute des squitters ADS_B est réalisée simultanément sur le diagramme SUM, sur le diagramme DIFF, sur le diagramme CONT_Front et sur le diagramme CONT_Back du radar. Cette écoute simultanée permet d'éviter le chevauchement des réponses asynchrones de cibles situées à des gisements différents et ainsi d'améliorer leur détection et leur décodage. Les aéronefs diffusent les réponses ADS-B, asynchrones, de façon omnidirectionnelle 30. La réponse d'un premier aéronef 31 est ainsi reçue sur le diagramme SUM, la réponse d'un deuxième aéronef 32 est ainsi reçue sur le diagramme CONT_Front et la réponse d'un troisième aéronef 33 est ainsi reçue sur le diagramme CONT_Back. La réception ADS-B indépendante par diagramme de l'antenne permet d'assurer la détection, dans cet exemple, de ces 3 squitters même si ils sont temporellement simultanés.

La figure 4a présente les gains des diagrammes d'une antenne secondaire ATC usuelle de la figure 1a en fonction de l'azimut. Plus précisément, la figure 4a quantifie l'amplitude des signaux reçus d'une même cible selon son azimut par rapport à l'axe 40 de l'antenne du radar, sur un tracé de 360° (+/- 180° par rapport à l'antenne). En fonctionnement synchrone du radar le diagramme prépondérant est SUM qui assure la transmission des interrogations utiles et la réception des réponses utiles alors que le rôle des diagrammes CONT_Front et CONT_Back se limite à garantir être supérieurs aux lobes secondaires du diagramme SUM, soit un gain relatif, ceci pour éviter les fausses détections radar (celles non dans l'axe). Au contraire, en réception asynchrone des squitters ADS-B et IFF, le rôle de CONT_Front et CONT_Back est prépondérant : leur gain absolu définit la portée du récepteur ADS-B et sa couverture sur 360° reflète le taux d'écoute temporelle des squitters. A moyenne portée ADS-B, le taux d'écoute temporelle réalisé par CONT_Front et CONT_Back est de la classe de 75%, ceci étant une conséquence de la conception de l'antenne secondaire ATC usuelle pour laquelle :
- dans son plan principal soit à + 90° et -90°en azimut le rayonnement est nul, ce qui ne pénalise en rien le fonctionnement synchrone du radar qui est normal au plan de cette antenne,
- dans l'axe de l'antenne, le gain de CONT_Front est volontairement atténué en mode synchrone : cette chute de gain de CONT_Front étant volontaire pour assurer une découpe nette en azimut du faisceau radar en mode synchrone.

Aussi, l'écoute sur SUM (voire même sur DIFF), en plus de celle sur CONT_Front permet d'assurer de l'ordre de 5% de couverture temporelle, en comblant la chute de gain du diagramme CONT_Front dans la normale au plan de l'antenne. Globalement, l'écoute asynchrone indépendante, donc simultanée, sur les deux ou trois diagrammes d'antennes (SUM, CONT ou SUM, CONT_Front, CONT_Back) permet d'assurer une couverture temporelle de l'écoute asynchrone de l'ordre de 80% à moyenne portée en ADS-B mais reste à moins de 50% à portée maximale en ADS-B.

La figure 4b présente le complément de rayonnement 41 en azimut du diagramme CONT_Back selon l'invention. L'objectif est d'assurer un rayonnement en réception à 1090 MHz d'un niveau équivalent sur l'ensemble de la couverture de CONT ainsi la réception des squitters ADS-B et IFF est assurée sur la portée maximale en ADS-B et IFF avec un taux d'écoute temporelle de 100%

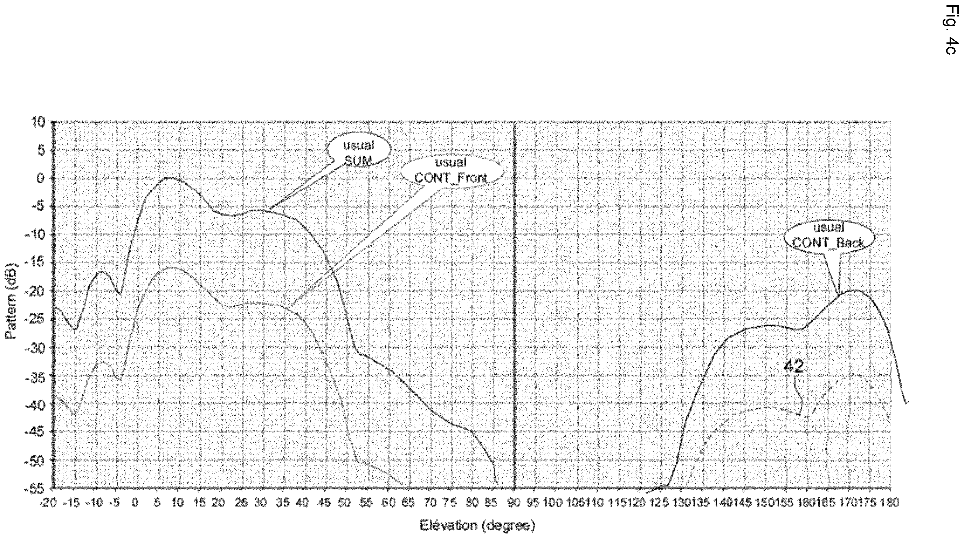

La figure 4c présente les gains des diagrammes d'une antenne secondaire ATC usuelle de la figure 1a en fonction de l'élévation. On y représente, chacun pour leur azimut de maximum, le diagramme de SUM, de CONT_Front et de CONT_Back :
- classiquement le diagramme de SUM a un maximum (voir la figure 4a) de l'ordre de 15 à 20 dB supérieur à CONT_Front,
- les fuites 42 du diagramme SUM du panneau avant, à l'opposé de la normale au plan de l'antenne, sont classiquement inférieures de -35dB.

On constate que, par conception, une antenne secondaire ATC présente une chute de gain très importante à haute élévation soit au-delà de 50° en élévation. En conséquence, les radars secondaires présentent classiquement une non détection dans le Cône de Silence (CoS) à partir de 45° d'élévation. L'ADS-B intégré au radar utilisant la même antenne présente le même type de CoS.

La figure 4d présente le complément de rayonnement 43 en élévation du diagramme CONT_Back selon l'invention. L'objectif est d'assurer un rayonnement en réception à 1090 MHz même à très haute élévation (>85°) permettant la réception des squitters ADS-B et IFF en accroissant le diagramme de CONT_Back vers les hautes élévations.

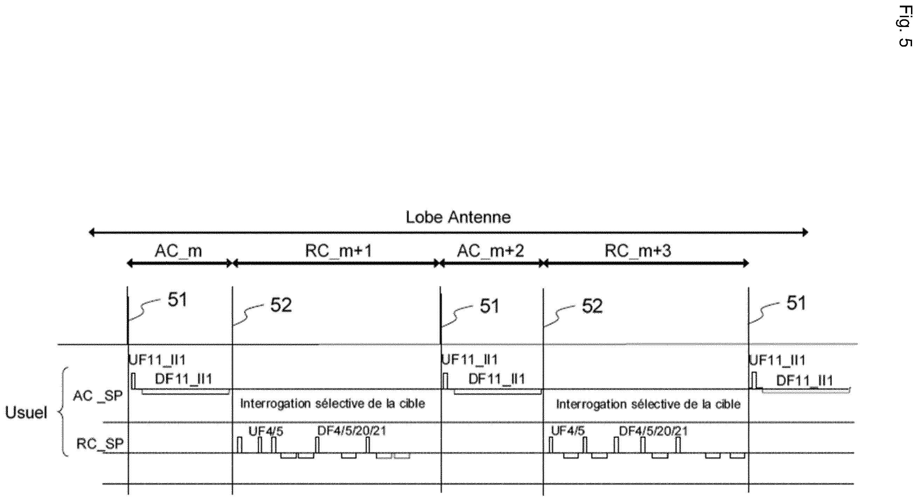

Les figures 5 et 6 illustrent les avantages de l'invention en ce qui concerne le séquencement des transactions sélectives et non sélectives. Plus précisément, la figure 5 présente un séquencement usuel avec un radar selon l'art antérieur et la figure 6 présente un séquencement optimisé avec un radar selon l'invention, en relation avec la deuxième étape 22 décrite en regard de la figure 2a.

Sur la figure 5, les périodes de transactions non sélectives « All Call » (AC) et de transactions sélectives « Roll Call » (RC) se succèdent selon un cadencement 51, 52. En exemple, la figure 5 présente quatre périodes successives d'ordre m, m+1, m+2 et m+3 lors d'un temps d'éclairement du lobe d'antenne du radar et correspondant successivement aux périodes AC et RC. Ces périodes AC et RC sont séparées ainsi que les phases d'émission et de réception qu'elles contiennent.

Le cadencement 61, 62 des interrogations AC, RC présenté par la figure 6 et correspondant à un radar selon l'invention, est différent. Les périodes RC sont plus réduites. En particulier, l'invention permet avantageusement d'optimiser la durée des séquences de transactions sélectives, en ayant la possibilité d'effectuer des émissions sélectives ou non pendant les phases d'écoutes sélectives ou non. Plus particulièrement, l'invention permet :
- de réduire la durée des périodes RC,
- d'imbriquer les périodes AC et RC, (les écoutes sélectives de la RC commencent dans les périodes AC),
et donc ainsi de repousser la limite du temps d'éclairement d'une cible : le lobe d'antenne couvre désormais ici sept phases AC ou RC (m à m+6).

La figure 7 présente une autre possibilité de séquencement des périodes AC et RC pour un radar selon l'invention. Le séquencement des périodes AC et RC est par exemple le même que dans le cas de la figure 5. Pour permettre la gestion des avions avant leur entrée dans la couverture opérationnelle du radar, l'écoute non sélective 71, débutée lors de la période AC, se poursuit pendant le début de la phase de transactions sélectives RC débutant nécessairement par des interrogations (mode synchrone), donc sans perte de temps d'éclairement pour les cibles présentes dans la couverture opérationnelle.

L'objectif est ici, indépendamment de l'optimisation des périodes RC précédentes (voir la figure 6), de détecter les cibles hors portée opérationnelle mais dans la portée radioélectrique du radar afin d'en réduire les réponses DF11 que ces cibles génèrent suite aux interrogations de ce radar,
- consommant inutilement leur potentiel de réponse ;
- polluant par ces réponses les autres radars en particulier, ceux plus proches des cibles.

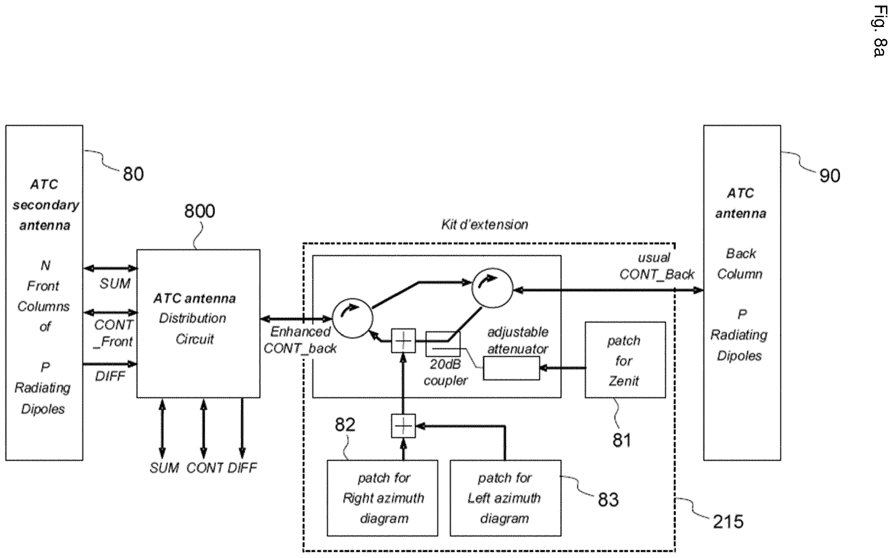

La figure 8a présente le synoptique d'un kit d'extension 215 du diagramme CONT_Back en réception à 1090 MHz (voir figure 2a) à la fois en azimut (autour de -90° et +90°) mais aussi en élévation au-delà de 50° d'élévation dans la configuration d'antenne à 3 diagrammes présentée à titre d'exemple. Ce kit 215 s'ajoute à la structure usuelle de l'antenne 1 composée :
- en face avant d'un ensemble 80 de N colonnes de P dipôles rayonnants (formant les diagrammes SUM, DIFF et CONT_Front),
- en face arrière d'une colonne 90 de P dipôles rayonnants, formant le diagramme CONT_Back.

Un circuit de distribution 800, bien connu de l'homme du métier, distribue les signaux vers les voies SUM, DIFF et CONT (CONT_Front et CONT_Back).

Ce kit d'extension du diagramme CONT_Back est destiné à combler les trous de détection illustrés notamment par les figures 4a à 4d, comme décrit ci-après.

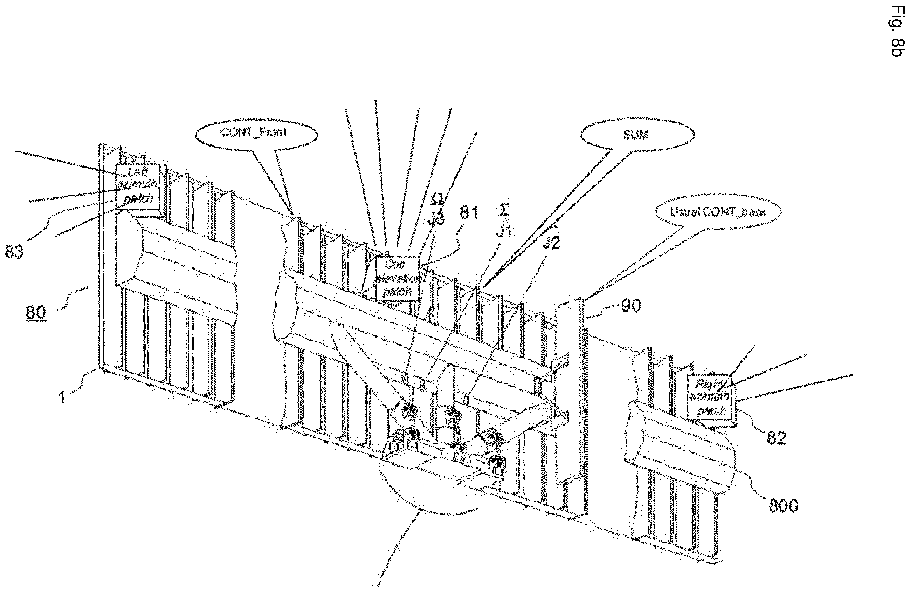

Afin de ne pas perturber le fonctionnement synchrone du radar, l'extension 215 de diagramme est limitée au besoin c'est-à-dire à la réception des squitters ADS-B et IFF. Elle est réalisée à l'opposé du panneau avant donc au niveau de CONT_Back comme l'illustre l'exemple de réalisation présenté en figure 8b. La partie rayonnante du kit d'extension est scindée en 3 patchs directifs 81, 82, 83 dans un plan (avec un lobe de l'ordre +/-35° par exemple) :
- l'un 81 pour combler le cône de silence avec un tilt en élévation de l'ordre de 110° dans son plan directif et à l'azimut 180°,
- un second 82 pour combler le trou de détection droit à l'azimut 90° dans son plan directif avec un tilt en élévation de l'ordre de 0°,
- un troisième 83 pour combler le trou de détection gauche à l'azimut -90° dans son plan directif avec un tilt en élévation de l'ordre de 0°.

Le routage des signaux entre le circuit de distribution la colonne 90 (CONT_Back classique) et les trois patchs 81, 82, 83 est classiquement réalisé par un ensemble de circulateurs, de coupleurs et de sommateurs.

La figure 8b présente un positionnement possible de ces éléments rayonnants 81, 82, 83 selon l'invention sur une antenne secondaire ATC usuelle 1. Les patchs « droit » 82 et «gauche » 83 sont disposés chacun à une extrémité arrière du plan de l'antenne. Le patch 81 affecté au cône de silence est placé au centre, à l'arrière du plan de l'antenne.

## Revendications

1. Radar secondaire comportant une antenne (1) présentant un diagramme de rayonnement formant une voie somme dite SUM, un diagramme de rayonnement formant une voie différence dite DIFF et un diagramme formant une voie de contrôle dite CONT, une première chaîne d'émission et de réception (4) étant associée à la voie SUM et une deuxième chaîne d'émission et de réception (4') étant associée à la voie CONT, une chaîne de réception (4") étant associée à la voie DIFF, **caractérisé en ce que** :
- chacune desdites chaînes d'émission et de réception (4, 4') est apte à émettre et à recevoir simultanément, la chaîne d'émission (401) comportant un filtrage (4A, 4B) filtrant les signaux émis à 1090 MHz et la chaîne de réception (402) comportant un filtrage (4C, 4D) filtrant les signaux émis à 1030 MHz, et ladite chaîne de réception (4") associée à la voie DIFF comportant un filtrage (4C, 4D) filtrant les signaux émis à 1030 MHz de telle façon que lesdites chaînes fonctionnent indépendamment l'une de l'autre, le niveau de signal en réception restant inchangé lors d'une émission d'interrogation synchrone ;
- les moyens de traitement (6) comportent une adaptation des bandes de fréquence en réception aux caractéristiques de chacun des protocoles de transaction utilisés ;
- lesdites chaînes de réception respectivement des voies SUM, DIFF et CONT sont aptes à fonctionner en écoutes synchrones et asynchrones simultanées de signaux reçus de cibles respectivement sur les diagrammes SUM, DIFF et CONT, lesdites écoutes synchrones et asynchrones étant indépendantes l'une de l'autre, le niveau de signal en réception restant inchangé lors d'une émission d'interrogation synchrone.

2. Radar secondaire selon la revendication 1, **caractérisé en ce que** ledit diagramme CONT étant composé d'un diagramme de rayonnement avant formant une voie dite CONT_Front et d'un diagramme de rayonnement arrière formant une voie dite CONT_Back, un traitement séparé desdits diagrammes CONT_Front et CONT_Back est réalisé de telle façon que chacune desdites chaînes d'émission (401) et de réception (402) est appliquée sur la voie CONT_Front et sur la voie CONT_Back.

3. Radar secondaire selon la revendication 2, **caractérisé en ce qu'**il comporte un kit d'extension du diagramme de rayonnement de la voie CONT_Back disposé sur la face arrière de ladite antenne (1), ledit kit comportant trois patchs rayonnants :
- un premier patch (81) pour combler le trou de détection en élévation dit cône de silence ;
- un second patch (82) pour combler le trou de détection à l'azimut 90° ;
- un troisième patch (83) pour combler le trou de détection à l'azimut -90°.

4. Radar secondaire selon l'une quelconque des revendications précédentes, **caractérisé en ce que** chacune desdites chaînes d'émission comporte des filtrages (4A, 4B) dédiés à la réjection des signaux parasites émis à 1090 MHz.

5. Radar secondaire selon l'une quelconque des revendications précédentes, **caractérisé en ce que** chacune desdites chaînes de réception comporte des filtrages (4C, 4D) dédiés à la rejection des signaux parasites à 1030 MHz, provenant de la voie d'émission.

6. Radar secondaire selon l'une quelconque des revendications précédentes, **caractérisé en ce que**, ayant pour mission la surveillance ATC (23), il effectue des écoutes simultanées sur lesdits diagrammes séparément des squitters ADS-B et indépendamment de transactions synchrones.

7. Radar secondaire selon l'une quelconque des revendications précédentes, **caractérisé en ce que**, ayant pour mission l'identification IFF, il effectue des détections synchrones IFF, indépendamment de transactions synchrones en SSR et mode S.

8. Radar secondaire selon l'une quelconque des revendications précédentes, **caractérisé en ce que**, ayant pour mission l'identification IFF, il effectue des écoutes simultanées sur lesdits diagrammes séparément des squitters Mode 5 de niveau 2, indépendamment de transactions synchrones.

9. Radar secondaire selon l'une quelconque des revendications précédentes, **caractérisé en ce que**, ayant pour mission le contrôle de l'environnement aérien (25), il effectue des écoutes simultanées sur lesdits diagrammes séparément de tout type de réponses secondaires, indépendamment de transactions synchrones.

10. Radar secondaire selon l'une quelconque des revendications précédentes, **caractérisé en ce que** ledit radar émettant successivement selon des périodes d'interrogations non sélectives, dite « All Call », et des périodes d'interrogations sélectives dites « Roll Call », les interrogations sélectives (63) commencent dans les périodes d'interrogations non sélectives.

11. Radar secondaire selon l'une quelconque des revendications précédentes, **caractérisé en ce que** ledit radar émettant successivement selon des périodes d'interrogations non sélectives, dite « All Call », et des périodes d'interrogations sélectives dites « Roll Call », les écoutes non sélectives (71) débutées lors des périodes « All Call » continuent dans les périodes « Roll Call ».

## Patentansprüche

1. Sekundärradar mit einer Antenne (1), die ein einen Summenkanal SUM bildendes Strahlungsdiagramm, ein einen Differenzkanal DIFF bildendes Strahlungsdiagramm und ein einen Kontrollkanal CONT bildendes Diagramm aufweist, wobei eine erste Sendeund Empfangskette (4) mit dem SUM-Kanal assoziiert ist und eine zweite Sende- und Empfangskette (4') mit dem CONT-Kanal assoziiert ist, wobei eine Empfangskette (4") mit dem DIFF-Kanal assoziiert ist, **dadurch gekennzeichnet, dass**:
- jeder der Sende- und Empfangsketten (4, 4') gleichzeitig senden und empfangen kann, wobei die Sendekette (401) eine Filterstufe (4A, 4B) umfasst, die die bei 1090 MHz gesendeten Signale filtert, und die Empfangskette (402) eine Filterstufe (4C, 4D) umfasst, die die bei 1030 MHz gesendeten Signale filtert, und die mit dem DIFF-Kanal assoziierte Empfangskette (4") eine Filterstufe (4C, 4D) umfasst, die die bei 1030 MHz gesendeten Signale filtert, so dass die Ketten unabhängig voneinander arbeiten, wobei der Signalpegel beim Empfang während einer synchronen Abfragesendung unverändert bleibt;
- die Verarbeitungsmittel (6) eine Anpassung der Frequenzbänder beim Empfang an die Charakteristiken jedes der verwendeten Transaktionsprotokolle umfassen;
- die jeweiligen Empfangsketten der SUM-, DIFF- und CONT-Kanäle gleichzeitig synchron und asynchron von Zielen über das jeweilige SUM-, DIFF- und CONT-Diagramm empfangene Signale abfragen können, wobei die synchronen und asynchronen Abhörvorgänge unabhängig voneinander sind, wobei der Signalpegel beim Empfang während einer synchronen Abfragesendung unverändert bleibt.

2. Sekundärradar nach Anspruch 1, **dadurch gekennzeichnet, dass** das CONT-Diagramm aus einem einen sogenannten CONT_Front-Kanal bildenden Vorwärtsstrahlungsdiagramm und einem einen sogenannten CONT_Back-Kanal bildenden Rückwärtsstrahlungsdiagramm besteht, wobei eine getrennte Verarbeitung der CONT_Front- und CONT_Back-Diagramme derart durchgeführt wird, dass jede der Sende- (401) und Empfangsketten (402) auf den CONT_Front-Kanal und auf den CONT Back-Kanal angewendet wird.

3. Sekundärradar nach Anspruch 2, **dadurch gekennzeichnet, dass** es ein Kit zur Erweiterung des Strahlungsdiagramms des auf der Rückseite der Antenne (1) angeordneten CONT_Back-Kanals umfasst, wobei das Kit drei strahlende Patches umfasst:
- ein erstes Patch (81) zum elevationsweisen Auffüllen des Detektionslochs, Stillekonus genannt;
- ein zweites Patch (82) zum Auffüllen des Detektionslochs im 90°-Azimut;
- ein drittes Patch (83) zum Auffüllen des Detektionslochs im -90°-Azimut.

4. Sekundärradar nach einem der vorherigen Ansprüche, **dadurch gekennzeichnet, dass** jede der Sendeketten Filterstufen (4A, 4B) zur Unterdrückung von bei 1090 MHz gesendeten Störsignalen enthält.

5. Sekundärradar nach einem der vorherigen Ansprüche, **dadurch gekennzeichnet, dass** jeder der Empfangskanäle Filterstufen (4C, 4D) zur Unterdrückung von vom Sendekanal stammenden Störsignalen bei 1030 MHz enthält.

6. Sekundärradar nach einem der vorherigen Ansprüche, **dadurch gekennzeichnet, dass** es, wenn seine Aufgabe die ATC-Überwachung (23) ist, simultane Abhörvorgänge über die Diagramme getrennt von den ADS-B-Squittern und unabhängig von synchronen Transaktionen durchführt.

7. Sekundärradar nach einem der vorherigen Ansprüche, **dadurch gekennzeichnet, dass** es, wenn seine Aufgabe die IFF-Identifikation ist, synchrone IFF-Detektionen unabhängig von synchronen Transaktionen in SSR und Mode S durchführt.

8. Sekundärradar nach einem der vorherigen Ansprüche, **dadurch gekennzeichnet, dass** es, wenn seine Aufgabe die IFF-Identifikation ist, simultane Abhörvorgänge über die Diagramme separat von Mode 5 Level 2 Squittern, unabhängig von synchronen Transaktionen durchführt.

9. Sekundärradar nach einem der vorherigen Ansprüche, **dadurch gekennzeichnet, dass** es, wenn seine Aufgabe die Kontrolle der Luftumgebung (25) ist, simultane Abhörvorgänge über die Diagramme separat von jeglicher Art von sekundären Antworten unabhängig von synchronen Transaktionen durchführt.

10. Sekundärradar nach einem der vorherigen Ansprüche, **dadurch gekennzeichnet, dass**, da das Radar nacheinander in "All Calls" genannten nicht-selektiven Abfrageperioden und "Roll Calls" genannten selektiven Abfrageperioden sendet, die selektiven Abfragen (63) in den nicht-selektiven Abfrageperioden beginnen.

11. Sekundärradar nach einem der vorherigen Ansprüche, **dadurch gekennzeichnet, dass**, da das Radar nacheinander in "All Calls" genannten nicht-selektiven Abfrageperioden und "Roll Calls" genannten selektiven Abfrageperioden sendet, die nicht-selektiven Abhörvorgänge (71), welche in den "All Call"-Perioden beginnen, in den "Roll Call"-Perioden fortgesetzt werden.

## Claims

1. A secondary radar comprising an antenna (1) having a radiation pattern forming a sum channel, designated SUM, a radiation pattern forming a difference channel, designated DIFF, and a pattern forming a control channel, designated CONT, a first transmission and reception chain (4) being associated with the SUM channel and a second transmission and reception chain (4') being associated with the CONT channel, a reception chain (4") being associated with the DIFF channel, **characterised in that**:
- each of said transmission and reception chains (4, 4') is able to transmit and to receive simultaneously, the transmission chain (401) comprising a filtering operation (4A, 4B) that filters signals transmitted at 1090 MHz and the reception chain (402) comprising a filtering operation (4C, 4D) that filters signals transmitted at 1030 MHz, and said reception chain (4") associated with the DIFF channel comprising a filtering operation (4C, 4D) that filter signals transmitted at 1030 MHz, in such a way that said chains operate independently of one another, the reception-side signal level remaining unchanged during a synchronous interrogation transmission;
- the processing means (6) comprise matching reception-side frequency bands to the characteristics of each of the transaction protocols used;
- said reception chains of the SUM, DIFF and CONT channels, respectively, are able to simultaneously listen in synchronous and asynchronous mode for signals received from targets via the SUM, DIFF and CONT patterns, respectively, said operations of listening in synchronous and asynchronous mode being independent of each other, the reception-side signal level remaining unchanged during a synchronous interrogation transmission.

2. The secondary radar according to claim 1, **characterised in that** said CONT pattern being composed of a front radiation pattern forming a channel designated CONT_Front and a back radiation pattern forming a channel designated CONT_Back, said CONT_Front and CONT_Back patterns are processed separately in such a way that each of said transmission (401) and reception chains (402) is applied to the CONT Front channel and to the CONT Back channel.

3. The secondary radar according to claim 2, **characterised in that** it comprises a kit for extending the radiation pattern of the CONT_Back channel, which is placed on the back side of said antenna (1), said kit comprising three radiating patches:
- a first patch (81) for filling the elevationwise detection hole called the cone of silence;
- a second patch (82) for filling the detection hole at the azimuth 90°;
- a third patch (83) for filling the detection hole at the azimuth -90°.

4. The secondary radar according to any one of the preceding claims, **characterised in that** each of said transmission chains comprises filtering operations (4A, 4B) dedicated to rejecting parasitic signals transmitted at 1090 MHz.

5. The secondary radar according to any one of the preceding claims, **characterised in that** each of said reception chains comprises filtering operations (4C, 4D) dedicated to rejecting parasitic signals at 1030 MHz originating from the transmission channel.

6. The secondary radar according to any one of the preceding claims, **characterised in that**, when its mission is ATC surveillance (23), it performs simultaneous listening operations via said patterns separately for ADS-B squitters and independently of synchronous transactions.

7. The secondary radar according to any one of the preceding claims, **characterised in that**, when its mission is IFF identification, it performs synchronous IFF detections, independently of synchronous SSR and Mode S transactions.

8. The secondary radar according to any one of the preceding claims, **characterised in that**, when its mission is IFF identification, it performs simultaneous listening operations via said patterns separately from Mode 5 Level 2 squitters, independently of synchronous transactions.

9. The secondary radar according to any one of the preceding claims, **characterised in that**, when its mission is control of the aerial environment (25), it performs simultaneous listening operations via said patterns separately for any type of secondary responses, independently of synchronous transactions.

10. The secondary radar according to any one of the preceding claims, **characterised in that** said radar successively transmitting in non-selective "All Call" interrogation periods and selective "Roll Call" interrogation periods, the selective interrogations (63) start in the non-selective interrogation periods.

11. The secondary radar according to any one of the preceding claims, **characterised in that** said radar successively transmitting in non-selective "All Call" interrogation periods and selective "Roll Call" interrogation periods, non-selective listening operations (71) started in "All Call" periods continue into "Roll Call" periods.
